# EUROPEAN PATENT SPECIFICATION

(11) **EP 0 914 266 B1**
(45) Date of publication and mention of the grant of the patent: **03.04.2002**
(21) Application number: 96926719.4
(22) Date of filing: 10.07.1996
(51) Int. Cl.: B60R 1/02

(54) **AUTOMATICALLY ADJUSTABLE PASSENGER MIRROR ASSEMBLY FOR A TRAILERED VEHICLE**
AUTOMATISCH VERSTELLBARER MITFAHRER SPIEGEL FÜR ANHÄNGERFAHRZEUG
ENSEMBLE RETROVISEUR DU COTE PASSAGER S'AJUSTANT AUTOMATIQUEMENT SUR UN VEHICULE A REMORQUE

(43) Date of publication of application: 12.05.1999
(73) Proprietor: Valentino, Joseph A., Holmes, PA 19043 (US)
(72) Inventor: Valentino, Joseph A., Holmes, PA 19043 (US)
(74) Representative: Neugebauer, Jürgen, Dipl.-Phys.
(86) International application number: US9611683
(87) International publication number: WO9801320

(56) References cited:
- WO-A-95/35224
- GB-A- 2 259 064
- US-A- 5 132 851
- PATENT ABSTRACTS OF JAPAN vol. 9, no. 330 (M-442), 25 December 1985 & JP 60 161232 A (HINO JIDOSHA), 22 August 1985,

## Description

### BACKGROUND OF THE INVENTION

### Field of the Invention

The invention relates to an assembly for automatically rotating a vehicle rear view mirror. More specifically, the invention relates both to an assembly for automatically rotating a rear view mirror mounted on a passenger side of a vehicle comprising a tractor hauling or semi-detached trailer, and to the rear view mirror itself.

### Description of the Related Art

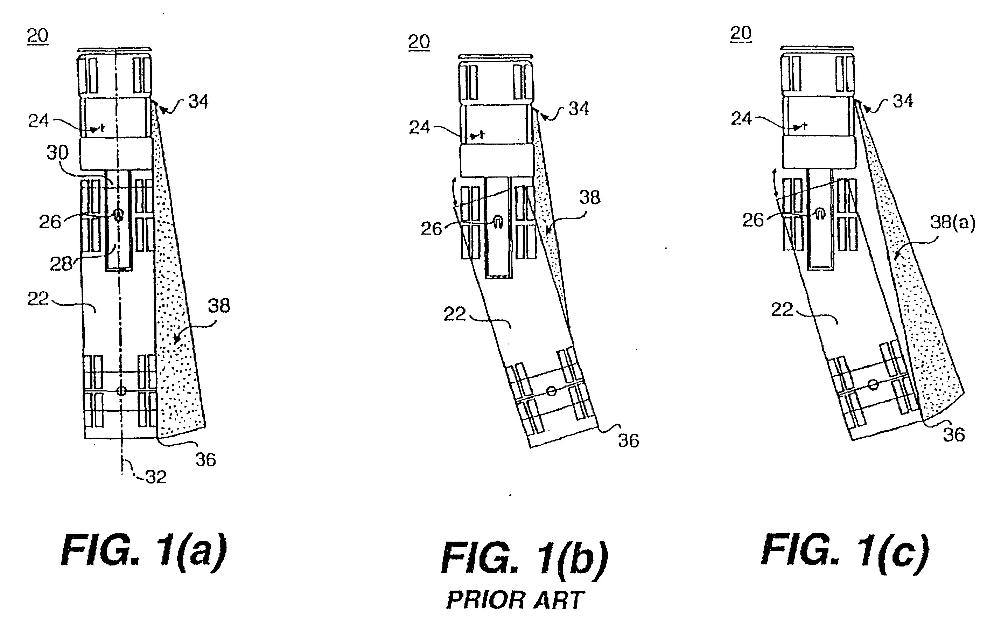

Trailered vehicles are well-known. Referring to Fig. 1, a trailered vehicle 20 comprises a semi-detached trailer 22 mounted to a tractor 24. Trailer 22 is mounted at a hitching point 26, typically referred to as a "fifth wheel," positioned at a rear end 28 of the tractor's chassis 30. The tractor and trailer generally align to define an imaginary axis 32. A passenger-side rear view mirror 34 typically is mounted on a passenger-side door of the tractor, and positioned generally in alignment with the axis 32, so that the driver can see the passenger-side rear corner 36 of the trailer 22. The driver typically adjusts this passenger-side mirror 34 either electrically, or by hand, according to the length of the trailer 22. The above-described relationship is shown in Fig. 1(a), depicting the right hand side as the passenger side, as is common for example in the United States, Canada and continental Europe. The driver's field of vision in the passenger-side mirror is depicted by reference numeral 38.

A problem occurs when the driver enters a turn, either going forward or reversing. As the tractor turns, the trailer pivots with respect to the tractor, forming an angle therebetween. The passenger-side rear view mirror, however, remain stationary. The trailer 22 therefore blocks the field of vision 38, causing the driver to lose sight of the passenger-side rear corner 36 of the trailer, along with any object in the vicinity. This problem is depicted in Fig. 1(b). Tighter turns obviously exacerbate this problem.

The resultant loss of rear visibility creates potentially dangerous situations. Whether driving on winding roads, or attempting to back the trailer into a parking lot or a loading dock, the driver's inability to see other vehicles, persons, or other objects in his passenger-side mirror can result in property damage or more serious accidents.

Reports published in 1994 indicate that out of 330,000 reported truck crashes in the U.S. in 1991, 19.1% (approximately 198,000) of these accidents involved backing, turning, lane-changing, or merging maneuvers by trailered vehicles. These crashes accounted for 1.0% of all fatalities, 10.8% of injuries, and 6.3% of costs for trailered vehicle accidents that year, with total direct monetary losses estimated at over $250 million.

A number of commercially available warning systems exist that give a driver a warning of objects behind his truck during a turn. Despite the desirability of such systems, surveys of professional truck drivers have noted several shortcomings with the available systems. For example, existing devices are not easy to install. Another problem exists with the reliability of the existing systems, including damage to the systems while in use. Another problem is the difficulty of using the existing systems. In short, existing systems to detect and warn drivers of objects behind a truck have limited areas of coverage, provide inconsistent warnings, and rarely are used.

A better solution is to enable the driver to rely on his passenger-side rear view mirror, by providing the mirror with the capability to rotate in response to a vehicle turn. Past attempts to provide such a device have met with limited success, as evidenced by the fact that no such device is in widespread use in the trucking industry.

An automatically adjustable passenger-side rear view mirror assembly is desired for trailered vehicles that is easy to install and operate, and is reliable under normal truck-driving conditions and environments.

GB 2 259 064 discloses a rear-view mirror apparatus for an articulated road vehicle according to the preamble of claim 1 which comprises at least one mirror unit attachable to a side of the tractor, wherein the or each mirror unit has a mirror and drive means for rotating the mirror about a generally vertical axis, and control means for controlling operation of the drive means to rotate the or each mirror according to the angle between the trailer and the tractor. The control means comprise an angle-sensing device having a first part, for example a rotary potentiometer and arm on the tractor and a second part, suitably an elastic cord on the end of the arm, which can be detachably connected to mounting means on the trailer.

US 5 132 851 A discloses an apparatus for automatically adjusting the angle of a side view mirror of a vehicle having a trailer coupled thereto. The apparatus includes a control unit and at least one transducer coupled to the vehicle for transducing signals from the control unit to a signal directed toward the trailer and which is reflected back to the at least one transducer. The transducers are used to determine an angle between the vehicle and the trailer. A microchip then generates an electrical signal related to the angle between the vehicle and the trailer. A transmitter transmits the electrical signal using radio waves to a receiver unit disposed near the side view mirror. The receiver unit includes a receiving antenna for receiving the signal transmitted from the transmitter. A drive unit is electrically coupled to said receiver unit for rotating and adjusting the angle of the side view mirror in accordance with the electrical signal.

WO9535224 discloses that the tractor unit of an articulated road vehicle includes an angle sensor unit which is mounted on a bracket which is spring biased to the in-use position and which is arranged to sense the angular position of the trailer relative to the tractor and to cause the rear view mirror for the driver to move so that he can always see the trail end of the trailer.

From Patent Abstracts of Japan, vol. 9, no. 30 (M-442), 25 December 1985 & JP 60 161232 there is known a rearview mirror adjusting device for a tractor wherein a detecting means detects as an electric signal the rotation angle of a coupler with a king pin of a trailer hooked on said tractor.

Additional objects and advantages of the invention will be set forth in the description which follows, and in part will be obvious from the description, or may be learned by practice of the invention. The objects and advantages of the invention may be realized and obtained by means of the combinations described in the attached claims.

### SUMMARY OF THE INVENTION

To achieve the foregoing objects, and in accordance with the purposes of the invention as embodied and broadly described herein, a mirror rotation assembly according to claim 1 and a method for remotely rotating a mirror on a vehicle according to claim 8 are provided. The dependent claims relate to advantageous embodiments of the present invention.

### DESCRIPTION OF THE DRAWINGS

Preferred embodiments of the present invention will be described in detail below with reference to the accompanying drawings. Together with the general description given above and the detailed description of the preferred embodiments given below, the drawings serve to explain the principles of the invention.
Fig. 1(a) is a top view of a trailered vehicle including a tractor and a semi-detached trailer, depicting the normal field of vision of a passenger-side rear view mirror;
Fig. 1(b) is a top view of a tractor and semi-detached trailer of the prior art, in which the field of vision in the passenger-side rear view mirror is reduced or eliminated during; a vehicle turn;
Fig. 1(c) is a top view of a tractor and semi-detached trailer including an automatically adjustable rear view mirror assembly according to the present invention, in which the driver retains the field of vision in the passenger-side rear view mirror during a vehicle turn;
Fig. 2 is a side view of certain components of a mirror rotation assembly according to the present invention;
Fig. 3 is a top view of the mirror rotation assembly components depicted in Fig. 2;
Fig. 4 is a top schematic view depicting the placement of a processor and wiring according to the present invention;
Fig. 5 is a side view of a vehicle tractor depicting placement of mirror rotation assembly components;
Fig. 6 is a front view of a control panel used with the present invention, located in the cab of the vehicle tractor;
Fig. 7 is a side view of a mirror assembly used with the present invention;
Fig. 8 is a front view of the mirror assembly shown in Fig. 7;
Fig. 9 is a top view of the mirror assembly shown in Fig. 7; and
Fig. 10 is a detailed front view of a mirror assembly having a detachable mirror face, which can be used with the present invention.

### DESCRIPTION OF THE PREFERRED EMBODIMENTS

Reference will now be made in detail to the presently preferred embodiments of the invention as broadly illustrated in the accompanying drawings.

A mirror rotation assembly is provided for a vehicle having a tractor and a pivotally connected semi-detached trailer. Referring to Fig. 1, vehicle 20 includes a trailer 22 which connects pivotally to a tractor 24 at a pivot point 26 commonly known in the trucking industry as the "fifth wheel." The fifth wheel 26 is positioned proximate a rear end 28 of tractor chassis 30. The tractor and trailer align to define an imaginary axis 32. A rear view mirror 34 is provided on the passenger-side door, to provide the driver a field of vision 38 encompassing the passenger-side rear corner 36 of the trailer. The overall configuration of a trailered vehicle, and the attachment between the trailer and the tractor, are well known and will not be described further.

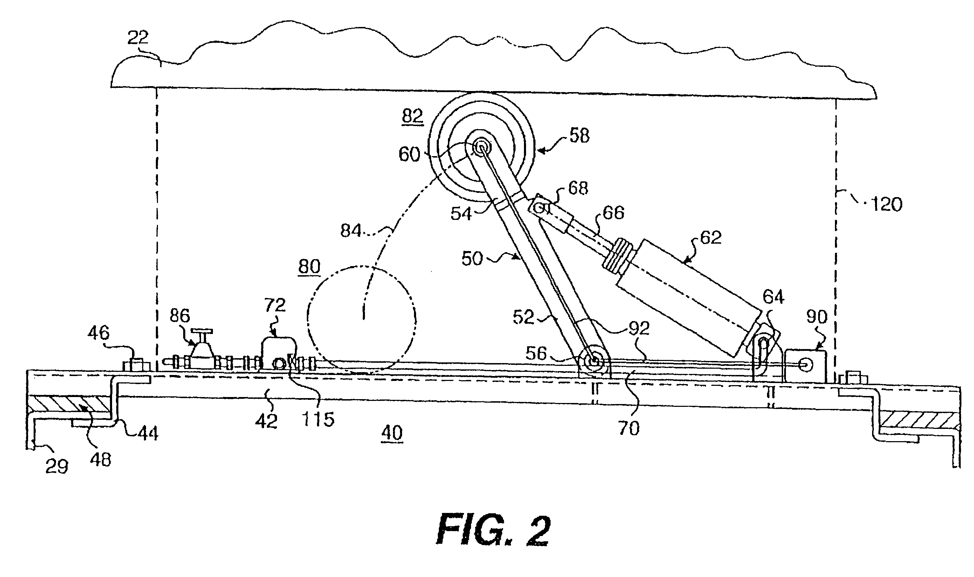

In accordance with the invention, an elongated arm having first and second ends is provided, the first end pivotally mountable to a support on the chassis of the tractor with the arm generally transverse to an axis defined by the tractor and the trailer, the second end supporting a rotatable wheel. As broadly depicted in Fig. 2, a support 40 is attachable to a plurality of positions on the tractor chassis. Preferably, support 40 is a steel cross member 42 mountable to channels 29 in the chassis at a number of selected positions in front of fifth wheel 26, using steel hold down clamps 44, bolts 46, and neoprene gaskets 48. Clamps 44 preferably are steel clamps. The use of clamps and bolts to secure cross member 42 to chassis 30 allows the driver to loosen the bolts and move the cross-member 42 to the desired position, depending on the particular trailer being towed. One of ordinary skill in the art will recognize that most commercial trailers in the United States have a steel plate with holes in it mounted on the underside of the trailer, either 12 inches or 22 inches in front of the fifth wheel. The position of the cross member 42 on the chassis therefore should be adjustable as necessary to avoid holes in this plate. Neoprene gaskets 48 allow for variations in chassis surfaces.

As further broadly depicted in Fig. 2, an elongated control arm 50 has a first end 52 and a second end 54. First end 52 attaches pivotally to support 40 at pivot point 56. A control wheel 58, preferably including a molded rubber tire having a maximum capacity of 2,76 MPa (400 psi,) is rotatably mounted at pivot point 60 at second end 54 of control arm 50.

In accordance with the invention, a pivot assembly is provided to pivot the arm from a disengaged position proximate the chassis to an engaged position with the wheel in rolling contact with an underside of the trailer. As broadly depicted in Fig. 2, a cylinder 62, preferably a dual-action pneumatic cylinder, is pivotally connected to support 40 at pivot point 64. Piston rod 66 projects from cylinder 62, and is pivotally connected to control arm 50 at pivot point 68, intermediate first end 52 and second end 54.

As broadly embodied herein, pressurized fluid is provided to actuate cylinder 62 via fluid line 70. Preferably, 0,103 MPa (15 psig) is supplied to cylinder 62 via the fluid line. In the preferred embodiment, the pressurized fluid is compressed air, preferably supplied by the vehicle's air compressor, via a solenoid control valve 72. This can be the same compressed air used in the vehicle brake system. However, it is within the scope of the invention to provide a separate pneumatic system to operate cylinder 62.

In accordance with the invention, control arm 50 and cylinder 62 are positioned on support 40 so that when cylinder 62 is pressurized, control arm 50 will be pivoted upward from a disengaged position 80 proximate the chassis, to an engaged position 82 with wheel 58 in rolling contact with the underside surface of trailer 22. Moreover, in accordance with the invention, these components are positioned so that the arc 84 defined by the arm's motior from disengaged position 80 to engaged position 82 is transverse to the axis 32 defined by the aligned tractor and trailer. The reason for this positioning will be apparent from the description of the operation of the invention given below.

It is also preferable that when control arm 50 is in the engaged position 82, wheel 58 be maintained in substantially continuous rolling contact with the underside of trailer 22. This feature of the invention takes into account normal road conditions, which will cause trailer 22 to move up and down as the vehicle wheels encounter bumps in the road. In order to help maintain this substantially continuous contact, a regulator 86 preferably is provided in fluid line 70 to adjust the pressure in cylinder 62 as necessary to adjust the position of control arm 50 and keep control wheel 58 in contact with trailer 22. Preferably, regulator 86 will operate to maintain substantially constant pressure in cylinder 62.

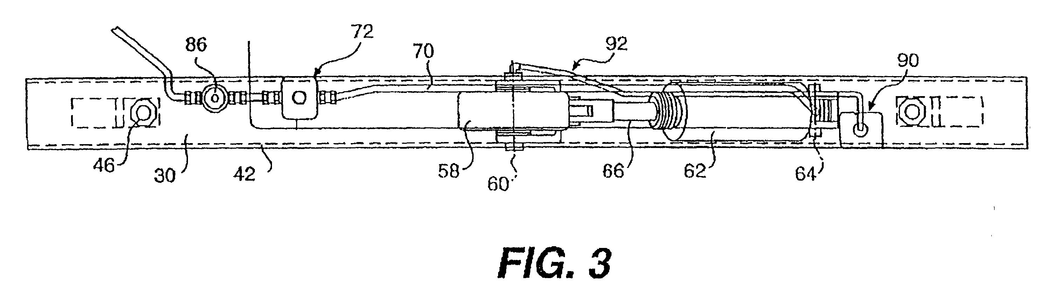

In accordance with the invention, a counter is provided, operable to count a number of rotations or partial rotations of the wheel as the trailer pivots with respect to the tractor during a vehicle turn. As broadly depicted herein, and referring to Figs. 2 and 3, an electronic counting mechanism 90 is attached to support 42. A rotatable cable 92, preferably a standard flex drive cable, links counting mechanism 90 to control wheel 58. Cable 92 can be, for example, a standard speedometer cable covered with a plastic sheath. As wheel 58 turns in response to a turn of the vehicle and corresponding pivot by the trailer about pivot point 26, cable 92 rotates in correspondence. The rotations or partial rotations of cable 92 in turn are converted in counter 90 into electronic pulses. Counter 90 counts these electronic pulses.

Another option for counting rotations of wheel 58, not shown in the drawings, is to place windows in the wheel 58, and mount a counter with a visual scan capability proximate the wheel to count the windows as they rotate past the counter.

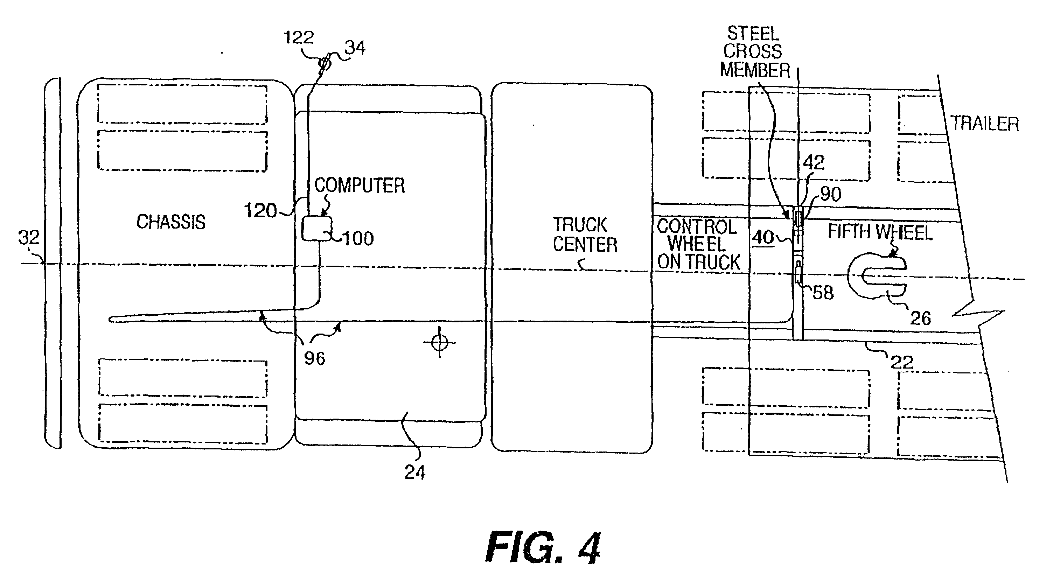

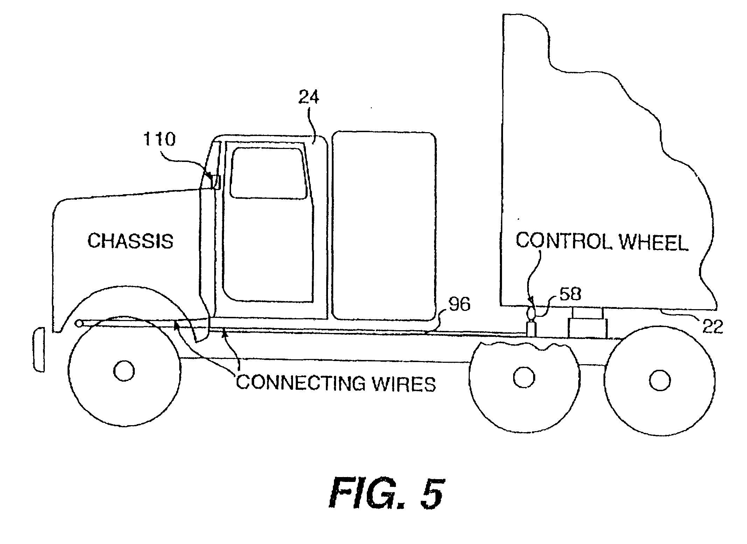

As broadly depicted in Figs. 4 and 5, electronic counter 90 is connected electrically to processor 100 (described below) with wire 96 mounted in the chassis and running into the tractor. Electronic pulses from counter 90 travel via wire 96 to the processor. Although a wire is shown and described, other modes of transmitting a signal from the counter 90 to the processor also are contemplated and fall within the scope of the invention. For example, fiber optic cable, a radio transmitter, or other modes of signal transmission can be used.

In accordance with the invention, a motor is provided connectable to a rotatable mirror on the tractor, and a processor is programmed to receive the number of wheel rotations from the counter, calculate a degree of vehicle turn corresponding to the number of wheel rotations, calculate a degree of mirror rotation corresponding to the degree of vehicle turn, and instruct the motor to rotate the mirror according to the calculated degree of mirror rotation. As broadly depicted in Figs. 4 and 5, a computer processor 100 is connected via wire 96 to counter 90, and mounted within tractor 24. Processor 100 receives the electronic pulses from counter 90. Processor 100 is programmed to calculate a degree of vehicle turn corresponding to the number of wheel rotations (i.e., electronic pulses) received from counter 90. Processor 100 then calculates an amount of mirror rotation, corresponding to the degree of vehicle turn, necessary to maintain a view of the passenger-side rear comer 36 of the trailer 22 within field of vision 38.

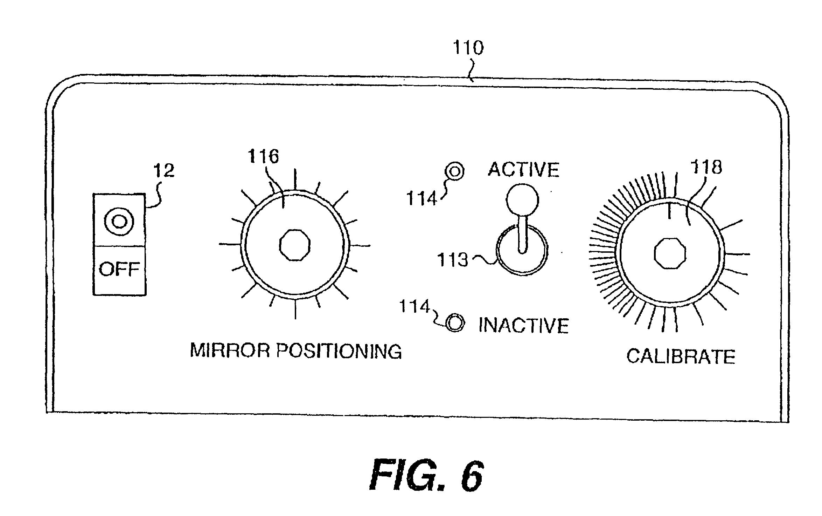

In order for the system to operate effectively, certain information should be input to processor 100 prior to the vehicle turn. A control box 110, shown broadly in Fig. 6, preferably is mounted in the cab in a position allowing easy manipulation by the driver. In addition to an on/off switch 112, an active/inactive switch 113, and system indicia 114, control box 110 includes a mirror positioning control 116 and a calibration control 118. Power to control box 110 is supplied from the vehicle's normal 12V or 24V electrical system. The mirror positioning control 116 enables the driver to set the mirror 34 in the desired location to provide an acceptable field of vision 38, generally along an axis substantially parallel to axis 32. Calibration control 118 enables the driver to input the length of the trailer 22. Presetting the trailer length into the processor is critical to determine the proper amount of mirror rotation to retain an acceptable field of vision during the vehicle turn, because the amount of rotation needed will be a function of the trailer length.

Indicators 114 preferably include an "Active/Inactive" signal light to advise the driver when fluid pressure has been supplied to the cylinder and the control arm is engaged. The "Active" signal can be configured to light when pressure is supplied to the cylinder. It is preferred, however, that a limit switch 115 be provided proximate solenoid control valve 72, activated by pressure when wheel 58 comes in contact with trailer 22, and deactivated when wheel 58 no longer contacts trailer 22, to provide the driver a positive indication that the system actually is engaged and capable of operating.

Preferably, processor 100 is connected electrically via wire 120 to a motor 122 in mirror assembly 34. As was the case with the connection between counter 90 and processor 100, wire 120 can be replaced with an optical fiber, a radio transmitter, or another signal transmitter well-known in the art.

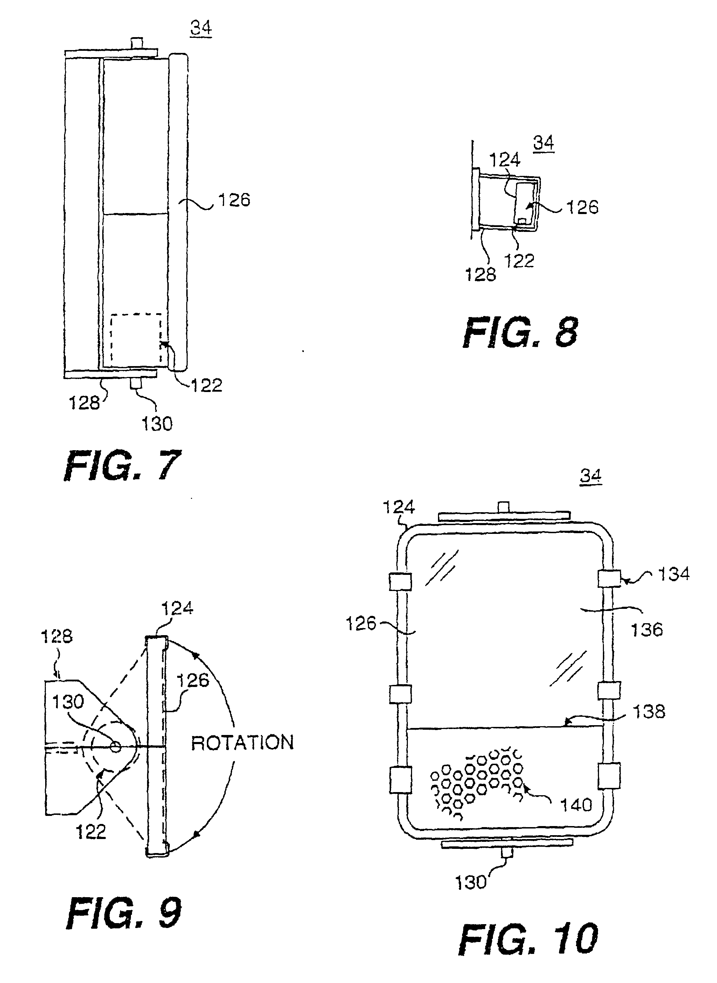

As broadly embodied in Figs. 7 and 8, motor 122 is a servo-motor positioned within frame 124 of mirror assembly 34. Frame 124 and mirror face 126 are mounted pivotally on universal mounting bracket 128 and post 130. Motor 122 connects to mirror frame 124 via appropriate mechanical gearing and linkages (not shown), in order to rotate mirror frame 124 and face 126 about post 130.

It further is preferable that mirror assembly 34 be capable of providing varying optical capabilities to the driver. For this purpose, it is preferred that a plurality of clips 134 be provided in an opening of frame 124, and that a plurality of different mirror faces 126, each having different optical characteristics, e.g., a regular face mirror, a panoramic view mirror, a wide angle mirror, a convex mirror, a spot mirror, or the like, be provided. In addition, selected mirror faces 126 can have multiple optical characteristics. As broadly depicted in Fig. 10, mirror face 126 comprises an upper portion 136, a dividing line 138, and a lower portion 140. Upper portion 136 and lower portion 140 have different optical characteristics. The driver can select the mirror face 126 appropriate for the driving to be done, and easily insert or remove mirror faces 126 by opening and closing clips 134.

The illustrated embodiment of the present invention operates as follows. After hooking up trailer 22 to fifth wheel 26. the driver manually sets support 40 to the proper position front to rear on chassis 30, and tightens down bolts 46. Entering the cab, the driver energizes the system with switch 112, sets the desired position of mirror assembly 34 with mirror positioning switch 116, and calibrates the system with calibration switch 118 by setting in the length of the trailer. Typically, the mirror position is set along an axis generally parallel with axis 32 defined by the tractor and trailer, thereby providing the driver with a view of the rear passenger-side corner 36 of the trailer.

After the system is energized with switch 112, the pneumatic cylinder is activated with switch 113. Solenoid-operated valve 72 opens and fluid pressure is provided via fluid line 70 to cylinder 62. Piston arm 66 retracts, pulling control arm 50 from disengaged position 80 to engaged position 82, with wheel 58 in rolling contact with the underside of trailer 22, along a line transverse to axis 32 defined by tractor 24 and trailer 22.

When the driver turns the vehicle, trailer 22 pivots with respect to tractor 24 about pivot point 26. As trailer 22 pivots, control wheel 58 turns, thereby rotating cable 92. As cable 92 rotates, the corresponding wheel rotations or partial rotations in the form of electronic pulses are counted by electronic counter 90. Electronic pulses then are transmitted to processor 100.

Processor 100 calculates a degree of vehicle turn corresponding to the counted rotations or partial rotations of control wheel 58. Already knowing the position of mirror assembly 36 and the length of trailer 22, processor 100 calculates a degree of mirror rotation corresponding to the degree of vehicle turn necessary to maintain the rear passenger corner of the trailer in the mirror's field of vision.

Processor 100 transmits the calculated degree of mirror rotation to servo-motor 122. Servo-motor 122 rotates mirror face 126 in order to establish a field of vision 38(a) as shown in Fig. 1(c).

Likewise, when trailer 22 pivots back into alignment with tractor 24 at the end of the turn. wheel 58 rolls and cable 90 pivots in the opposite direction, resulting in a signal to rotate the mirror back to the original position, restoring original field of vision 38.

In this manner, the driver always can see the rear passenger-side corner of the trailer, even during a vehicle turn. Moreover, because regulator 86 maintains constant pressure in cylinder 62 as the trailer moves up and down, wheel 58 is kept in substantially continuous contact with the underside of trailer 22, even on rough roads. Preferably, when limit switch 115 is provided, the driver has continuous positive indication at control box 110 when wheel 58 is engaging the underside of trailer 22.

Modifications can be made to the above-described invention. For example, the presence of ice, slush, and salt on roads in northern climates can interfere with the operation of control arm 50 and wheel 58. In order to protect these components from the external environment, a detachable or permanent protective housing 120 (depicted broadly in Fig. 2) can be provided. The interchangeability of signal transmitting devices between counter and processor, and between processor and servo-motor, also has been discussed. The system can be provided only with a servo-motor to connect to an existing mirror assembly, or can be provided with its own rotatable mirror assembly to mount on the tractor. The mirror assembly itself can include a single mirror face, or a plurality of interchangeable mirror faces with varying optical characteristics. A separate power source and/or pressurized fluid source can be provided, or the system can operate from the vehicle's electrical system and/or high pressure air system. The control panel 110 also can be configured to enable the driver to deenergize the automatic mirror rotation capability and take direct control of mirror rotation.

Additionally, although the invention has been described with respect to a passenger-side mirror on the right-hand side of the vehicle, it can also be configured to work with the driver's-side mirror assembly, or with a passenger-side mirror on the lefthand side of the vehicle for use in countries where drivers drive on the right side of the road.

Additional modifications readily will occur to those skilled in the art. For example, in order to work with trailers lacking a smooth underside surface, e.g., fuel tankers, car carriers, or ten and twenty-yard dirt haulers, a flat steel plate can be mounted on the front end trailer underside for wheel 58 to roll against. Such modifications are well within the skill level of persons of ordinary skill.

## Claims

1. A mirror rotation assembly for a vehicle (20) having a tractor (24), a pivotally connected semi-detached trailer (22) and a motorized mirror (34) mounted on the tractor (24), the assembly comprising:
a control means for rotating the motorized mirror (34) according to the angle between the tractor (24) and the trailer (22), **characterized in that** the assembly further comprises
a rotatable control wheel (58);
a wheel support apparatus (40) supporting the rotatable control wheel (58) and configured to move the control wheel (58) into rolling engagement with a bottom surface of the trailer (22);
a counter (90) operable to count a number of rotations or partial rotations of the control wheel (58) as the trailer (22) pivots with respect to the tractor (24) during a vehicle turn; and **in that** the control means is
a processor (100) programmed to receive the number of wheel rotations or partial rotations from the counter (90) calculate a degree of vehicle turn corresponding to the number of wheel rotations or partial rotations, calculate a degree of mirror rotation corresponding to the degree of vehicle turn, and instruct the motorized mirror (34) to rotate the mirror according to the calculated degree of mirror rotation.

2. The assembly of claim 1, wherein the motor connects to a rearview mirror mounted on the passenger side of the tractor (24).

3. The assembly of claim 1 or 2, wherein the processor is further programmed to calculate the degree of mirror rotation according to a preset length of the trailer (22).

4. The assembly according to any of the preceding claims, further comprising a device operable to center the mirror along an axis substantially parallel to the axis (32) defined by the tractor and the trailer.

5. The assembly according to any of the preceding claims, wherein the wheel support apparatus (40) is configured to move the control wheel (58) out of engagement with the trailer (22) when the trailer is disconnected from the tractor (24).

6. The assembly according to any of the preceding claims, further comprising means for applying a biasing force to the wheel support apparatus (40) to maintain the control wheel in engagement with the trailer (24).

7. The assembly according to any of the preceding claims, wherein the wheel support apparatus (40) includes an elongated arm (50) pivotally attached to a chassis (30) of the tractor (24).

8. A method for remotely rotating a mirror on a vehicle (20) having a tractor (24) and a pivotally connected semi-detached trailer (22), comprising the steps of:
pivotally attaching a first end of an elongated arm to support on a chassis (30) of the tractor (24) generally transverse to an axis (32) defined by the tractor (24) and the trailer (22) a second end of the arm rotatably supporting a wheel;
pivoting the control arm up to an engaged position with the wheel in rolling contact with an underside of the trailer (22),
counting a number of rotations or partial rotations of the wheel as the trailer (22) pivots with respect to the tractor (24) during a vehicle turn;
calculating a degree of vehicle turn corresponding to the number of rotations or partial rotations of the wheel;
calculating a degree of mirror rotation corresponding to the degree of vehicle turn;and
automatically rotating the mirror in accordance with the calculated degree of mirror rotation.

9. The method of claim 8, wherein the step of pivoting the arm to the engaged position includes applying fluid pressure to pivot the control arm (50) to the engaged portion.

10. The method of claim 9, wherein the step of applying fluid pressure includes maintaining the fluid pressure generally constant while the arm (50) is in the engaged position.

11. The method of claim 9, wherein the step of calculating a degree of mirror rotation further corresponds to a preset length of the trailer (22).

12. The method of claim 9, further including a step of centering the mirror along an axis substantially parallel to the axis (32) defined by the tractor (24) and the trailer (22) prior to the vehicle turn.

## Patentansprüche

1. Spiegeldrehvorrichtung für ein Fahrzeug (20) mit einer Zugeinheit (24) und einem schwenkbar damit verbundenen und teilweise abgesetzten Anhänger (22), und einem motorgesteuerten Spiegel (34), welcher auf der Zugeinheit (24) angebracht ist, wobei die Vorrichtung eine Steuervorrichtung zum Drehen des motorgesteuerten Spiegels (34) in Abhängikeit vom Winkel zwischen der Zugeinheit (24) und dem Anhänger (22) umfaßt,
**dadurch gekennzeichnet,**
**daß** die Vorrichtung weiterhin umfaßt:
ein drehbares Rad (58) zum Steuern;
eine Radstützvorrichtung (40), welche das drehbare Rad (58) zum Steuern stützt und dazu ausgelegt ist, das Rad (58) zum Steuern in einen Zustand des abrollenden Berührens mit einer unteren Oberfläche des Anhängers (22) zu bringen;
einen Zähler (90), welcher betrieben werden kann, um die Anzahl von Drehungen oder teilweisen Drehungen des Rads (58) zum Steuern zu erfassen, während der Anhänger (22) relativ zur Zugeinheit (24) während einer Richtungsänderung des Fahrzeugs schwenkt; und
**daß** die Steuermittel ein Prozessor (100) sind, welcher dazu programmiert ist, die Anzahl der Drehungen oder teilweisen Drehungen des Rades vom Zähler (90) zu erhalten, um ein Maß für die Richtungsänderung des Fahrzeugs zu berechnen, welche der Anzahl der Drehungen oder teilweisen Drehungen des Rades entspricht, um den Grad der Spiegeldrehung zu berechnen, welche dem Grad der Richtungsänderung des Fahrzeugs entspricht, und den motorgesteuerten Spiegel (34) dazu zu bringen, daß er den Spiegel entsprechend dem berechneten Maß für die Spiegeldrehung verdreht.

2. Vorrichtung nach Anspruch 1, wobei der Motor mit einem Rückspiegel verbunden ist, welcher auf der Beifahrerseite der Zugeinheit (24) angebracht ist.

3. Vorrichtung nach Anspruch 1 oder 2, wobei der Prozessor weiterhin dazu programmiert ist, das Maß der Spiegeldrehung in Abhängigkeit von einer vorbestimmten Länge des Anhängers (22) zu berechnen.

4. Vorrichtung nach einem der vorstehenden Ansprüche, welche weiterhin eine Vorrichtung umfaßt, die betrieben werden kann, um den Spiegel längs einer Achse zu zentrieren, welche im wesentlichen parallel ist zur Achse (32), welche durch die Zugeinheit und den Anhänger festgelegt ist.

5. Vorrichtung nach einem der vorstehenden Ansprüche, wobei die Radstützvorrichtung (40) ausgelegt ist, um das Rad (58) zum Steuern aus einem Zustand der Berührung mit dem Anhänger (22) zu bringen, wenn der Anhänger von der Zugeinheit (24) gelöst wird.

6. Vorrichtung nach einem der vorstehenden Ansprüche, welche weiterhin Mittel zum Aufbringen einer Anpresskraft auf die Radstützvorrichtung (40) umfaßt, um das Rad zum Steuern in Berührung mit dem Anhänger (22) zu halten.

7. Vorrichtung nach einem der vorstehenden Ansprüche, wobei die Radstützvorrichting (40) einen verlängerten Arm (50) umfaßt, welcher schwenkbar an dem Fahrgestell (30) der Zugeinheit (24) angebracht ist.

8. Verfahren zum ferngesteuerten Drehen eines Spiegels an einem Fahzeug (20) mit einer Zugeinheit (24) und einem schwenkbaren damit verbundenden, teilweise abge setztem Anhänger (22), welches die folgenden Schritte umfaßt:
Anlegen eines ersten Endes eines verlängerten Arms an einem Fahrgestell (30) einer Zugeinheit (24) durch Schwenken des Arms, und zwar im wesentlichen quer zu einer Achse (32), welche festgelegt ist durch die Zugeinheit (24) und den Anhänger (22), wobei ein zweites Ende des Arms ein Rad drehbar stützt;
Schwenken des Kontrollarmes in eine Eingriffsposition wobei das Rad in rollende Berührung mit der Unterseite des Anhängers (22) kommt;
Zählen der Anzahl der Drehungen oder teilweisen Drehungen des Rades während der Anhänger (22) während einer Richtungsänderung des Fahrzeugs relativ zur Zugeinheit (24) schwenkt;
Berechnen eines Maßes für die Richtungsänderung des Fahrzeugs entsprechend der Anzahl der Drehungen oder teilweise Drehungen des Rades;
Berechnen eines Maßes für die Spiegeldrehung, welche dem Maß für die Richtungsänderung des Fahrzeugs entspricht; und
automatisches Drehen des Spiegels in Abhängigkeit von dem berechneten Maß für die Spiegeldrehung.

9. Verfahren nach Anspruch 8 wobei der Schritt des Schwenkens des Arms in die Eingriffsposition umfaßt, daß ein Flüssigkeitsdruck aufgebracht wird, um den Arm (5) zum Steuern in die Eingriffsposition zu bringen.

10. Verfahren nach Anspruch 9 wobei der Schritt des Aufbringens eines Flüssigkeitsdrucks umfaßt, daß der Flüssigkeitsdruck im wesentlichen konstant gehalten wird, während der Arm (50) sich in der Eingriffsposition befindet.

11. Verfahren nach Anspruch 9 wobei der Schritt des Berechnens des Maßes der Spiegeldrehung weiterhin einer vorbestimmten Länge des Anhängers (22) entspricht.

12. Verfahren nach Anspruch 9, welches weiterhin einen Schritt umfaßt zum Zentrieren des Spiegels längs einer Achse, welche im wesentlichen parallel ist zu der Achse (32), die festgelegt ist durch die Zugeinheit (24) und den Anhänger (22) bevor eine Richtungsänderung des Fahrzeugs erfolgt.

## Revendications

1. Ensemble de rotation de miroir destiné à un véhicule (20) comportant un tracteur (24), une semi-remorque reliée avec possibilité de pivotement (22) et un miroir motorisé (34) monté sur le tracteur (24), l'ensemble comprenant :
un moyen de commande destiné à faire tourner le miroir motorisé (34) conformément à l'angle entre le tracteur (24) et la remorque (22), **caractérisé en ce que** l'ensemble comprend en outre
une roue de commande pouvant être entraînée en rotation (58),
un dispositif de support de roue (40) supportant la roue de commande pouvant être entraînée en rotation (58) et configuré pour déplacer la roue de commande (58) en contact roulant avec une surface inférieure de la remorque (22),
un compteur (90) pouvant être mis en oeuvre pour compter le nombre de rotations ou de rotations partielles de la roue de commande (58) lorsque la remorque (22) pivote par rapport au tracteur (24) durant un changement de direction du véhicule, et **en ce que** le moyen de commande est
un processeur (100) programmé pour recevoir le nombre de rotations ou de rotations partielles de roue provenant du compteur (90), calculer un degré de changement de direction du véhicule correspondant au nombre de rotations ou de rotations partielles de roue, calculer un degré de rotation du miroir correspondant au degré de changement de direction du véhicule, et donner des instructions au miroir motorisé (34) pour faire tourner le miroir conformément au degré calculé de rotation du miroir.

2. Ensemble selon la revendication 1, dans lequel le moteur se relie à un rétroviseur monté sur le côté passager du tracteur (24).

3. Ensemble selon la revendication 1 ou 2, dans lequel le processeur est en outre programmé pour calculer le degré de rotation du miroir conformément à une longueur préétablie de la remorque (22).

4. Ensemble selon l'une quelconque des revendications précédentes, comprenant en outre un dispositif pouvant être mis en oeuvre pour centrer le miroir le long d'un axe sensiblement parallèle à l'axe (32) défini par le tracteur et la remorque.

5. Ensemble selon l'une quelconque des revendications précédentes, dans lequel le dispositif de support de roue (40) est configuré pour déplacer la roue de commande (58) hors de prise avec la remorque (22) lorsque la remorque est séparée du tracteur (24).

6. Ensemble selon l'une quelconque des revendications précédentes, comprenant en outre un moyen destiné à appliquer une force de sollicitation au dispositif de support de roue (40) pour maintenir la roue de commande en prise avec la remorque (22).

7. Ensemble selon l'une quelconque des revendications précédentes, dans lequel le dispositif de support de roue (40) comprend un bras allongé (50) fixé avec possibilité de pivotement à un châssis (30) du tracteur (24).

8. Procédé destiné à faire tourner à distance un miroir sur un véhicule (20) comportant un tracteur (24) et une semi-remorque reliée avec possibilité de pivotement (22), comprenant les étapes consistant à :
fixer avec possibilité de pivotement une première extrémité d'un bras allongé afin de supporter sur un châssis (30) du tracteur (24) sensiblement transversalement à un axe (30) du tracteur (24) sensiblement transversalement à un axe (32) défini par le tracteur (24) et la remorque (22), une seconde extrémité du bras supportant avec possibilité de rotation une roue,
faire pivoter le bras de commande jusqu'à une position de mise en prise avec la roue en contact roulant avec une surface inférieure de la remorque (22),
compter le nombre de rotations ou de rotations partielles de la roue lorsque la remorque (22) pivote par rapport au tracteur (24) durant un changement de direction du véhicule,
calculer un degré de changement de direction du véhicule correspondant au nombre de rotations ou de rotations partielles de la roue,
calculer un degré de rotation du miroir correspondant au degré de changement de direction du véhicule, et
faire tourner automatiquement le miroir conformément au degré calculé de rotation du miroir.

9. Procédé selon la revendication 8, dans lequel l'étape consistant à faire pivoter le bras vers la position de mise en prise comprend l'application d'une pression de fluide pour faire pivoter le bras de commande (50) vers la position de mise en prise.

10. Procédé selon la revendication 9, dans lequel l'étape consistant à appliquer une pression de fluide comprend le maintien de la pression de fluide sensiblement constante tandis que le bras (50) se trouve à la position de mise en prise.

11. Procédé selon la revendication 9, dans lequel l'étape consistant à calculer un degré de rotation de miroir correspond en outre à une longueur préétablie de la remorque (22).

12. Procédé selon la revendication 9, comprenant en outre une étape consistant à centrer le miroir le long d'un axe sensiblement parallèle à l'axe (32) défini par le tracteur (24) et la remorque (22) avant le changement de direction du véhicule.
